# EUROPEAN PATENT APPLICATION

(11) **EP 0 976 626 A1**
(43) Date of publication of application: **02.02.2000**
(21) Application number: 98830460.6
(22) Date of filing: 29.07.1998
(51) Int. Cl.: B60R 25/00, B60R 25/04, G06F 9/24, G07C 5/08

(54) **Vehicle security system**

(71) Applicant: Elser S.p.A., 21022 Brunello (Varese) (IT)
(72) Inventor: Menegolo, Marco, 21020 Daverio (Varese) (IT)
(74) Representative: Bosotti, Luciano

(57) **Abstract**

A security system for vehicles comprises a control device (12) which can be fitted in a vehicle and which has a programmable internal memory unit arranged for storing operative parameters of the system, an interface (I) associated with the control device (12) for access to the internal memory unit, and at least one non-volatile memory storage unit (M) which is outside the control device (12) and separate therefrom, and which can be coupled to the control device (12) by means of the interface (I).
The external memory unit (M) is arranged to perform at least one function selected from the group constituted by:
- receiving from the internal memory unit a respective set of analysis data indicative of current operative parameters of the system during an analysis stage, and
- providing the internal memory unit with a respective set of programming data indicative of programmed operative parameters of the system during a programming stage.

## Description

The present invention relates to a security system for vehicles and, in particular, to a security system for vehicles comprising a control device which can be fitted in a vehicle and which has a programmable internal memory unit arranged for storing operative parameters of the system.

Nowadays, security systems for protecting vehicles, commonly known as anti-theft systems, are widely available on the market in many configurations which are distinguished according to the type of protection sensors provided and to the type of anti-theft service which they offer (for example, alarms and/or immobilizers).

In general, in these security systems, the protection sensors (internal protection sensors, peripheral sensors, anti-tow-away sensor, etc.), send a set of state signals to a control device which recognizes and interprets them. When anomalous situations are encountered, anti-theft protection devices such as sirens and other acoustic and visual warning devices, or circuits for immobilizing the engine for an active protective action, are activated.

Each control device comprises an internal memory unit or state memory (a non-volatile memory which may be an EEPROM) tor storing data relating to the operative parameters of the entire system, that is, the set of configurations of the sensors and of the anti-theft devices installed in the vehicle and their mode of operation.

A complete and functional security system should be capable of being configured, that is, it should be possible to modify some or all of the modes of operation in dependence on the type of vehicle in which the system is fitted, on the owner's preferences, and on the requirements of insurance companies and of the legal norms in force in the country in which the vehicle is registered (particularly relating to the use of sirens and other acoustic warnings).

A solution commonly used in the art for enabling an anti-theft security system to be programmed is that of providing the control device with a plurality of selectors (more usually known as dip switches) operable manually by the final user in order to modify some of the most common operative parameters. The user can thus set activation or exclusion of the sensors and of additional functions of the system without difficulty. With the use of this solution, the programming possibilities are restricted both by the limited number of selectors available and because of the intrinsic inflexibility of the programming which such a method involves.

With this solution, however, the final user can be prevented from having control of the operative parameters which, if modified deliberately or accidentally, may cause incorrect operation of the entire system and damage to the vehicle. In fact, it suffices to exclude such predetermined parameters from the set of parameters which can be modified by means of selectors.

Moreover, in countries in which operative parameters such as the period for which a siren or other acoustic warning device connectible to the system is activated are bound to the observance of a current defined regulation, it is advisable, in order not to break the law, to prevent the final user from arbitrarily modifying this parameter. However, this strategy is not without disadvantages; when the same product is intended for a country in which the legal and insurance requirements with regard to the modes of operation of an anti-theft system are considerably different, the choice of not permitting access to certain configurative solutions greatly limits the performance of the system and its success on the market.

Improved security systems with respect to the type described above permit more detailed programming by means of an external programming unit. A programming device of this unit, with which installers are normally equipped, can be connected to the internal memory of the control device in order to read the state of the system therefrom during a diagnostic stage, and to modify the operative parameters thereof during a configuration stage.

These programming devices are bulky and expensive and generally make use of specific codes substantially similar to a kind of machine code interpretable only with the use of tables and manuals of use. For correct use and in order to make full use of the diagnostic and programming capabilities of the device, the installer is required to have experience and specific knowledge of the system with which the device is interfacing. The installer has to undertake a lengthy and repetitive procedure for each system to be analyzed or configured and this is particularly onerous when it is necessary to program a plurality of control devices, for example because they are intended for a particular model of vehicle or a predetermined country.

A further difficulty is due to the fact that the problems set out above arise for several different manufacturers' anti-theft systems, requiring the installer to have a vast knowledge of different programming units, and increasing the difficulty and inaccuracy of the aforementioned operations.

The object of the invention is to provide a security system for vehicles which is arranged to simplify the analysis and programming of the operative parameters stored in the internal memory of the control device by an installer.

For this purpose, the subject of the present invention is a security system for vehicles, characterized in that it comprises interface means associated to said control device for access to said internal memory unit and non-volatile memory storage means outside the control device and separate therefrom, and capable of being coupled to the control device by said interface means in order to perform at least one function selected from the group constituted by:
- receiving from the internal memory unit a respective set of analysis data indicative of current operative parameters of the system, during an analysis stage, and
- providing the internal memory unit with a respective set of programming data indicative of programmed operative parameters of the system, during a programming stage.

In the currently-preferred embodiment, the system according to the invention has, basically, an interface device for bidirectional communication between the control device and a non-volatile memory unit outside the control device. This memory unit may be formed as a re-writable semiconductor memory, for example an EEPROM, enclosed in a casing of limited size and weight, so that it can easily be transported to a remote service unit for analyzing and/or programming the control system. Typically, said memory unit may be configured in the form of a "key" which can be coupled to the anti-theft system in ways similar to those adopted, for example, for the keys with which vehicle owners are provided for priming/depriming the anti-theft system when the remote control normally provided for this purpose is out of order or not available.

The system preferably includes two separate memory units which are distinguishable from one another (being formed, for example, as keys of different colours) usable during analysis of the current operative parameters of the system (reading memory) and during programming of the desired operative parameters (writing memory), respectively.

During analysis, the reading memory is coupled to the control device of the system under test in order to have reading access to the internal memory unit. The data contained therein is stored in the reading memory which, upon completion of the operation, can be transferred, for example, to a device for coupling to a remote service unit, so as to render the data stored therein available to this unit for analysis of the state of the system.

During programming, the operative parameters indicative of the desired configuration selected in the remote service unit are stored in the writing memory which is coupled to the service unit beforehand. This memory can then be transferred to the system (or to the systems) to be programmed and coupled to the respective control device in order to have writing access to the internal memory unit which can read and store the data in order to be reconfigured.

The analysis and programming of the operative parameters is entrusted to an installer or to the manufacturing company itself and may take place in locations remote from the system under test. By virtue of the fact that the external memory unit is a non-volatile memory, it also enables the data to be stored for subsequent use a long time after the time at which the control device of the system is operated on directly, if the operator physically acquiring the data is not qualified or lacks the equipment to analyze the data and to interpret the results.

The installer can process the analysis and programming data by means of an electronic processor (usually an ordinary personal computer) to which the external memory unit is connected by means of a corresponding interface module associated with the processor. This solves the problem due to the use of external programming units which require experience and competence from the installer. Simple and comprehensible computer programs which interpret the numerical data indicative of the operative parameters and represent them in a form intelligible to the user can be used.

Alternatively, the data stored in the external memory may be exchanged with a expert of the company which manufactured the system by sending him the memory or connecting it to an ordinary modem by means of a corresponding interface module in order to activate remote transmission of the data via the telephone network.

Another advantage of the solution proposed lies in the fact that, at the programming stage, it is possible to define a system configuration once and for all (for example, in order to comply with the current rules) regardless of the number of systems which have to be programmed in this configuration, and to store the data indicative of the parameters programmed on one or more external memory units, arranged for transfer to the systems to be programmed. These memory units can then be coupled to the systems in a short time without requiring difficult and repetitive operations. The exchange of data between the external memory unit and the system takes place quickly and without errors.

Further advantages and characteristics of the present invention will become clear from the following detailed description, given with reference to the appended drawings, provided purely by way of non-limiting example in which:
- Figure 1 is a simplified block diagram of a security system for vehicles according to the invention,
- Figure 2a is a simplified block diagram of a first coupling mode between a component of the system and a remote service unit, and
- Figure 2b is a simplified block diagram of a second coupling mode between a component of the system and a remote service unit.

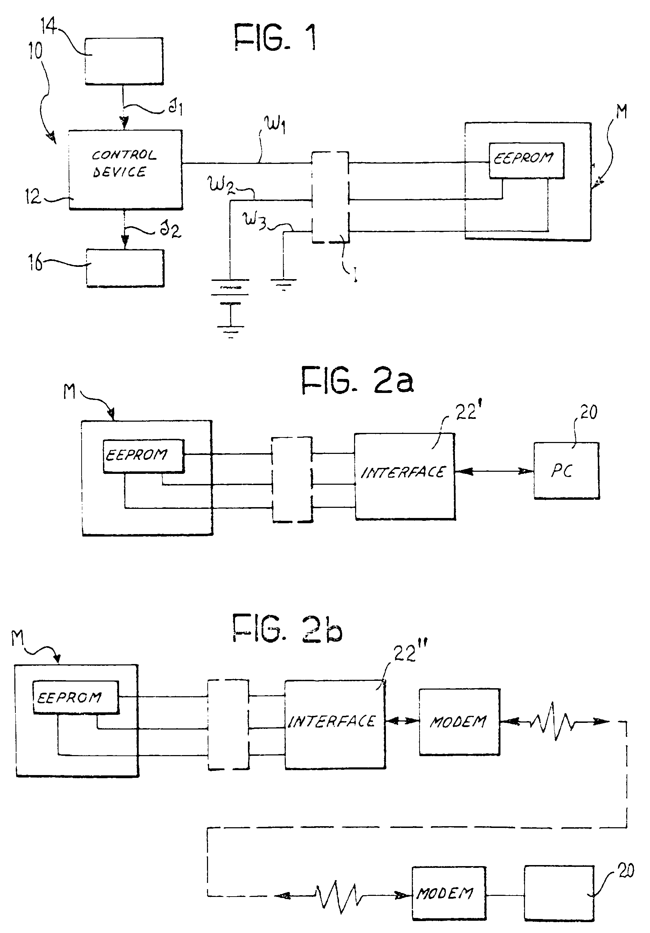

In Figure 1, an anti-theft security system for vehicles is indicated with numeral 10. The system comprises a control device 12 provided with a programmable internal memory unit, not shown.

A series of protection sensors (such as ultrasonic internal protection sensors, volumetric protection sensors, absorption sensors, anti-tow-away sensors, inclination sensors, and the like) is indicated in a single block 14, the sensors being connected to the control device 12 to which they transmit a set of state signals s₁ indicative of the protection conditions of the vehicle.

One or more anti-theft devices (such as alarm sirens, immobilizers, and the like) are indicated in a single block 16 associated with the control device 12 and controlled thereby by means of a set of control signals s₂.

The system has an interface I between the control device 12 and externally connectible devices for permitting access to the internal memory unit. In a simple embodiment, this interface is constituted by an electrical connector or, preferably, by touch-sensitive electrical contacts. In the example shown in Figure 1, three terminals are provided by the control device 12, that is, respectively, first conductor w₁ by means of which data can be transferred by a bidirectional serial connection, a second conductor w₂ for providing a supply voltage, and a third conductor w₃ for the ground reference voltage. It is also possible to use only two connecting terminals, one ground reference terminal and one terminal having supply and data-transfer functions. On the other hand, the use of more complex transmission protocols is not excluded, in which case, it is also necessary to provide an auxiliary set of control signals.

An equivalent solution consists of performing the data transfer with a parallel connection. In this case, the interface I will have at least one terminal for connection to a data bus of suitable size (for this application a 4-bit or 8-bit bus is considered adequate).

An external memory unit M is provided with interface terminals corresponding to those provided in association with the control device 12 so that it can be coupled thereto, by means of the interface I, in order to exchange data (by means of the serial or parallel connection). The external memory unit M comprises a re-writable, non-volatile semiconductor memory, preferably an EEPROM, encapsulated in a protective casing from which only the connection terminals are accessible. The casing is a rigid casing of limited size and weight so that it can be handled and transported easily, and may be configured in the form of a "key" wholly similar to those with which vehicle owners are equipped, and which are arranged to prime/deprime the anti-theft system as an alternative to the remote control normally provided for this purpose.

The external memory unit M is used, during analysis or diagnosis of the system, for storing the set of data indicative of the state of the system and transferring this data to a remote service unit 20, which may not be present at the location of the system under test and therefore may not be directly connectible to the control device 12.

In a manner substantially similar to that mentioned above, the external memory unit M is also used during programming of the system in order to transfer to the system the set of programming data previously preset in the remote service unit 20 and subsequently stored in the memory unit.

According to an alternative embodiment (not shown) the interface I may comprise electromagnetic radio-communication devices for making a connection by means of radio waves. In a further alternative embodiment (not shown), communication between the control device 12 and an external memory unit M may take place by means of infra-red rays or, more generally, optical signals. In both cases, both the control device 12 and the external memory unit M are provided with electromagnetic/optical devices for transmitting and receiving the corresponding signals.

Interface modules 22' and 22'' are provided for ensuring the exchange of data with the remote service unit 20, as illustrated in Figure 2a and 2b.

Figure 2a is a simplified block diagram of a coupling mode between the external memory unit M and an electronic processor (an ordinary personal computer) which acts as a remote service unit 20. In Figure 2b, the memory unit M is coupled to a generic service unit 20 (for example, an ordinary personal computer, as above) by means of a telephone line. In both cases, it suffices to provide respective interface modules 22' and 22'' for translating the format of the data stared in the unit M to that which can be processed by a normal computer or by a normal modem.

In both cases, a simplification of both the analysis and the programming procedures of the anti-theft system is advantageously provided for, these stages being performed basically by an operator working with an electronic processor (the service unit 20) which will have an easy-to-use software program. It will be possible, by means of this program, to modify operative parameters of the system which are not accessible by means of any manual selectors which may be present on the control device 12 and to prevent access to these parameters by others, for example, by making this capability subject to the possession of an initialization memory unit (a "master") for re-programming the system ex *novo*.

A particular security system having the characteristics claimed may also be used for the anti-theft protection of hired or loaned vehicles. A system of this type is in fact configured for easily exchanging with a remote unit 20 operative parameters of any type and also, in particular, information indicative of the manner of use of the vehicle with which the system is associated. By providing the system with one or more auxiliary circuits (not shown) associated with the control device 12 and arranged to detect data indicative of the manner in which the vehicle is currently being used, such as, for example, the nunber of times it has been started, or the total travel time during the hire period, it is possible, upon every attempt to start the vehicle, to compare the detected data with corresponding limit parameters programmed by the hirer (in whose premises a remote unit 20 is located) and if the programmed (agreed) manner of use is not complied with, to activate the protection devices to prevent further starting of the vehicle.

The analysis and programming stages of the anti-theft system will be described in greater detail below with reference to the appended drawings. In a preferred embodiment, two separate external memory units M are used, one for each specific access function to the internal memory unit of the control device 12, that is, a reading unit or "key" and a writing unit or "key", respectively, which can be distinguished from one another, for example, by the colour of the casing, to prevent confusion by the person performing the analysis and programming of the systems.

During an analysis stage, an operator, hereinafter referred to as a qualifier installer, activates the control device 12 of the system 10 or in any case selects the mode of operation for reading access to the internal memory unit of the control device 12. An external memory unit M (a reading memory) is then coupled to the control device 12 by means of the interface I so as to enable the control device 12 to write on the memory unit the set of analysis data which is indicative of the current operative parameters of the system and is present in the internal memory unit.

This operation is quick (a few seconds) and reliable and has been found particularly easy when the system 10 is installed in a vehicle and the control device 12 is arranged in a position with poor access.

The external memory unit M is uncoupled from the control device after the emission of an operation-completed signal such as the lighting of an LED or the emission of a sound recognizable as such a signal.

The external memory unit M thus uncoupled can be transferred directly to the remote service unit 20 required for processing and interpreting the data. This may be a personal computer provided at the installer's workshop or located at the premises of the company which manufactured the system, to whom the memory unit to be analyzed can be sent for analysis by ordinary postal channels. If quick diagnosis is necessary but is impossible at the installer's workshop, the memory unit M can be connected to a modem by means of the interface module 22'' which reads its contents and sends them on the telephone line to the manufacturer or, in general, to a qualified operator who can analyze the data.

During a programming stage, the qualified installer selects a plurality of predetermined operative parameters of the system, for example on the basis of the legal and insurance requirements relating to the modes of operation, or on the basis of the agreed manner of use of the vehicle, by means of a software program supplied by the manufacturing company and installed in a remote service unit 20.

The program generates a set of programming data indicative of the operative parameters programmed and the remote service unit 20 stores this data, via the interface module 22' or 22'', in the external memory unit M which has been coupled thereto in accordance with one of the configurations illustrated in Figures 2a and 2b.

Once uncoupled, the external memory unit M can be transferred directly to the system or systems to be programmed. An operator activates the control device 12 of the system 10 to be programmed, or in any case selects the mode of operation for writing access to the internal memory unit of the control device 12. The external memory unit M is then coupled to the control device 12 by means of the interface I so as to enable the control device 12 to read the set of programming data and store it in the internal memory unit.

This operation is quick (a few seconds) and reliable and has been found particularly effective when a plurality of systems have to be programmed or reprogrammed, enabling the operator to complete the work in a much shorter time than would be required if the programming steps had to be repeated for each system, for example if the system were connected directly to a programming device. The external memory unit M is uncoupled from the control device 12 upon completion of the programming after the emission of an operation-completed signal such as the lighting of an LED or the emission of a sound recognizable as such a signal.

## Claims

1. A security system for vehicles comprising a control device (12) which can be fitted in a vehicle and which has a programmable internal memory unit arranged for storing operative parameters of the system, characterized in that it comprises:
- interface means (I) associated to said control device (12) for access to said internal memory unit, and
- non-volatile memory storage means (M) outside the control device (12) and separate therefrom, and capable of being coupled to the control device (12) by said interface means (I) in order to perform at least one function selected from the group constituted by:
- receiving from the internal memory unit a respective set of analysis data indicative of current operative parameters of the system during an analysis stage, and
- providing the internal memory unit with a respective set of programming data indicative of programmed operative parameters of the system during a programming stage.

2. A system according to Claim 1, characterized in that said storage means (M) are freely transportable and capable of being coupled, at a different time, to a remote service unit (20) in order to supply thereto the set of analysis data previously received from the control device (12) during the analysis stage, or to receive therefrom the set of programming data for subsequent supply to the control device (12) during the programming stage, respectively.

3. A system according to Claim 1 or Claim 2, characterized in that said storage means (M) comprise at least one re-writable semiconductor memory.

4. A system according to Claim 3, characterized in that said semiconductor memory is an EEPROM.

5. A system according to Claim 3, characterized in that said storage means (M) comprise two separate semiconductor memories distinguishable from one another and usable during the analysis stage and during the programming stage, respectively.

6. A system according to Claim 5, characterized in that each memory is encapsulated in a casing formed as a "key" which can be coupled to the control device (12) in a manner similar to that adopted for coupling devices for activating/deactivating the system, said key being distinguishable by means of its colour.

7. A system according to any one of Claims 2 to 6, characterized in that the remote service unit (20) is an electronic processor having an interface arranged for coupling to said storage means (M).

8. A system according to any one of Claims 2 to 7, characterized in that the remote service unit (20) can be connected to said storage means (M) by a telephone line.

9. A system according to any one of the preceding claims, characterized in that the storage means (M) can be coupled to the control device (12) by means of a bidirectional serial connection.

10. A system according to any one of Claims 1 to 8, characterized in that the storage means (M) can be coupled to the control device (12) by means of a data bus, for a parallel connection.

11. A system according to any one of the preceding claims, characterized in that the interface means (I) between the control device (12) and the storage means (M) comprise an electrical connector.

12. A system according to any one of Claims 1 to 10, characterized in that the interface means (I) between the control device (12) and the storage means (M) comprise touch-sensitive contacts.

13. A system according to any one of Claims 1 to 10, characterized in that the interface means (I) between the control device (12) and the storage means (M) comprise electromagnetic radio-communication devices.

14. A system according to any one of Claims 1 to 10, characterized in that the interface means (I) between the control device (12) and the storage means (M) comprise opto-electronic devices for optical communications.

15. A system according to any one of Claims 2 to 14, characterized in that the remote service unit (20) is adapted to permit interpretation of analysis data received from the storage means (M) and selection of programming data for transfer to the storage means (M), by means of processor programs.

16. A system according to any one of the preceding claims, characterized in that the analysis and programming data comprise, respectively, information indicative of the current manner of use of the vehicle and information indicative of the programmed manner of use of the vehicle, the control device (12) being adapted to compare said current manner of use with said programmed manner of use and being capable of activating predetermined anti-theft devices if the programmed manner of use is not complied with.

17. A method of programming a security system for vehicles having the characteristics defined in Claims 1 to 16, comprising the steps of:
- selecting a plurality of operative parameters of the system in a remote service unit (20),
- storing in the storage means (M), which is coupled to the remote service unit (20) beforehand, a set of programming data indicative of the operative parameters programmed,
- transferring the storage means (M) to the system to be programmed (10),
- activating the control device (12) of the system (10) and selecting the mode of operation for writing access to internal memory unit of the control device (12),
- coupling the storage means (M) to said control device (12) by the interface means (I) in order for the control device (12) to read the data stored in the storage means (M) and for this data to be written in the internal memory, and
- uncoupling the storage means (M) from the control device (12) after the emission of a reading completed-signal.

18. A method of analyzing a security system for vehicles having the characteristics defined in Claims 1 to 16, comprising the steps of:
- activating the control device (12) of the system to be analyzed (10) and selecting the mode of operation for reading access to the internal memory unit of the control device (12),
- coupling the storage means (M) to said control device (12) by the interface means (I) in order for the control device (12) to write in the storage means (M) the set of analysis data indicative of the current operative parameters of the system and present in the internal memory unit,
- uncoupling the storage means (M) from the control device (12) after the emission of a writing completed signal,
- transferring the storage means (M) to a device for coupling to a remote service unit (20), and
- reading the data stored in the storage means (M) which is coupled to the remote service unit (20) beforehand and interpreting said data as operative parameters of the system.
